# EUROPÄISCHE PATENTSCHRIFT

(11) **EP 3 284 336 B1**
(45) Veröffentlichungstag und Bekanntmachung des Hinweises auf die Patenterteilung: **17.04.2019**
(21) Anmeldenummer: 17185377.3
(22) Anmeldetag: 08.08.2017
(51) Int. Cl.: A01F 15/12, A01F 15/14

(54) **BALLENWICKELEINRICHTUNG FÜR EINE RUNDBALLENPRESSE, RUNDBALLENPRESSE UND VERFAHREN ZUM BETREIBEN EINER SOLCHEN**
BALE ROLLING DEVICE FOR A ROUND-BALE PRESS, ROUND-BALE PRESS AND METHOD FOR OPERATING THE SAME
DISPOSITIF D'ENROULEMENT DE BALLES POUR UNE PRESSE À BALLES RONDES, PRESSE À BALLES RONDES ET SON PROCÉDÉ DE FONCTIONNEMENT

(30) Priorität: 12.08.2016 DE 102016215085
(43) Veröffentlichungstag der Anmeldung: 21.02.2018
(73) Patentinhaber: Deere & Company, Moline, IL 61265 (US)
(72) Erfinder: Chapon, Emmanuel, 68163 Mannheim (DE); Repecaud, Romain, 68163 Mannheim (DE); Gresset, Pascal, 68163 Mannheim (DE)
(74) Vertreter: Reichert, Christian

(56) Entgegenhaltungen:
- EP-A1- 2 982 235
- US-B1- 6 622 463

## Beschreibung

Die Erfindung betrifft eine Ballenwickeleinrichtung für eine Rundballenpresse, mit einer Antriebsrolle, die mit einer Umwicklungsmaterialrolle in Eingriff bringbar ist und einer mit der Antriebsrolle verbundenen Antriebs- und Bremseinrichtung, wobei die Antriebs- und Bremseinrichtung sowohl mit einem variabel spannbaren Antriebsriemen als auch mit einem variabel spannbaren Bremsriemen in Verbindung steht und wobei der Antriebsriemen (48) mit einer Riemenantriebsrolle (60) in Eingriff steht, welche mit Antriebsmitteln verbindbar ist.

Rundballenpressen sind bekannt. Ferner ist es bekannt, Rundballenpressen mit einer Ballenwickeleinrichtung auszurüsten, wodurch ein gepresster Ballen mit einem Umwicklungsmaterial umwickelt wird und im Anschluss daran in gewickelter Form ausgeworfen werden kann. Der Ballen wird in einer zylindrischen Presskammer der Rundballenpresse während einer Ballenbildungsphase in Form gebracht. Dazu wird auf dem Boden liegendes Erntegut von einer Erntegutaufnahmeeinrichtung in die Presskammer gefördert und durch angeordnete Pressmittel ein zylindrischer Ballen geformt. Die Presskammer kann als feste Presskammer, mit zylindrisch angeordneten Presswalzen, oder auch als variable Presskammer, mit variablen Pressmitteln, beispielsweise Pressriemen oder Pressketten, ausgebildet sein. In einer der Ballenbildungsphase folgenden Umwicklungsmaterialeinführungsphase, wird von einer Umwicklungsmaterialrolle ein Umwicklungsmaterial in Richtung des mittlerweile ausgeformten Ballens in die Presskammer geführt und von der Außenseite des Ballens mitgerissen. Als Umwicklungsmaterial wird, üblicherweise Netz, Folie oder Garn verwendet. Durch den sich drehenden Ballen wird das Umwicklungsmaterial in einer Umwicklungsmaterialwickelphase um den Ballen geführt. Es folgt eine Umwicklungsmaterialtrennphase, in der das Umwicklungsmaterial durch eine Schneideinrichtung vom Ballen getrennt wird, bevor der Ballen in der Ballenauswurfphase ausgeworfen bzw. auf den Boden abgelegt wird. Es hat sich als problematisch herausgestellt, die Geschwindigkeit der Umwicklungsmaterialrolle den einzelnen Phasen anzupassen und insbesondere dabei auch eine gewisse Brems- oder Beschleunigungskraft auf die Umwicklungsmaterialrolle wirken zu lassen, so dass für die entsprechenden Phasen eine optimale Umwicklungsmaterialentlastung oder Umwicklungsmaterialstraffung vorliegt.

Eine Rundballenpresse der oben beschriebenen Art ist beispielsweise aus der EP 2 982 235 A1, bekannt, wobei eine Antriebsrolle für eine Umwicklungsmaterialrolle mit einer Antriebs- und Bremseinrichtung verbunden ist und die Antriebs- und Bremseinrichtung sowohl mit einem variabel spannbaren Antriebsriemen als auch mit einem variabel spannbaren Bremsriemen in Verbindung steht. Die Antriebs- und Bremseinrichtung wird über eine Riemenantriebsrolle angetrieben, die mit einer Antriebseinheit verbunden ist, wobei die Riemenantriebsrolle über eine Kupplung mit der Antriebseinheit verbindbar ist.

Bei nicht den Phasen entsprechend angepasster Umwicklungsmaterialentlastung bzw. Umwicklungsmaterialstraffung kann es zu Verwicklungen des Umwicklungsmaterials mit den Pressmitteln oder auch zu fehlerhaften Umwicklungsmaterialtrennungen kommen, was den Ballenpressprozess unter Umständen stören oder gar unterbrechen würde. Es wird daher angestrebt, eine Ballenwickeleinrichtung für eine Rundballenpresse zu schaffen, mit welcher eine Rundballenpresse sowohl mit einer optimierbaren Umwicklungsmaterialentlastung als auch mit einer optimierbaren Umwicklungsmaterialstraffung in den einzelnen genannten Phasen eines Ballenpressprozesses betreibbar ist.

Diesbezüglich wird eine Ballenwickeleinrichtung der eingangs genannten Art derart ausgebildet, dass eine Freilaufeinrichtung vorgesehen ist, derart, dass die Riemenantriebsrolle Antriebsmitteln für die Riemenantriebsrolle in Antriebsdrehrichtung vorauseilen kann. Durch den variabel spannbaren Antriebsriemen bzw. dem variabel spannbaren Bremsriemen kann eine Wechselwirkung zwischen den Riemen erzeugt werden, die eine ballenpressphasenabhängige Optimierung der Umwicklungsmaterialentlastung bzw. Umwicklungsmaterialspannung ermöglicht, wobei die mit der Antriebsrolle verbundene Antriebs- und Bremseinrichtung derart beaufschlagt wird, dass die Antriebsrolle während der Umwicklungsmaterialeinführungsphase ein Antriebsmoment erfährt, so dass Umwicklungsmaterial abgegeben wird und in die Ballenpresskammer führbar ist. In der darauf folgenden Umwicklungsmaterialwickelphase kann dann für die Antriebsrolle ein Bremsmoment eingeführt werden, wodurch die Umwicklungsmaterialrolle gebremst und das durch den Ballen mitgerissene bzw. mitgezogene Umwicklungsmaterial gespannt wird. Wiederum in der darauf folgenden Phase kann das Bremsmoment an die Umwicklungsmaterialtrennphase angepasst werden, so dass eine Umwicklungsmaterialtrennung mit optimierter Umwicklungsmaterialspannung erfolgen kann. Durch die variabel spannbaren Antriebs- und Bremsriemen können in verschiedenen Betriebsstellungen für die Ballenwickeleinrichtung voneinander unabhängig einstellbare Antriebs- und/oder Bremsmomente an der Antriebs- und Bremseinrichtung bzw. an der Antriebsrolle realisiert werden. Die Riemenantriebsrolle ist derart mit einer Freilaufeinrichtung verbunden, dass sie einer angetriebenen und die Riemenantriebsrolle antreibenden Presswalze vorauseilen kann, beziehungsweise eine höhere Umdrehungszahl aufweisen kann und nur in der entgegengesetzten Richtung drehfest mit der Presswalze verbunden ist.

Die Antriebs- und Bremseinrichtung kann eine kombinierte Antriebs- und Bremstrommel umfassen, wobei die kombinierte Antriebs- und Bremstrommel drehfest mit der Antriebsrolle verbunden ist, sowie mit dem Antriebsriemen und mit dem Bremsriemen in Verbindung steht. Die Antriebs- und Bremstrommel kann dabei als einteilige Trommel oder Riemenscheibe mit zwei parallelen Riemenführungen, oder beispielsweise auch durch zwei miteinander drehfest verbundene Riemenscheiben ausgebildet sein. Über die drehfeste Verbindung der Antriebs- und Bremstrommel mit der Antriebsrolle kann letztere über den Antriebsriemen angetrieben und über den Bremsriemen gleichzeitig auch abgebremst werden, so dass sich eine variable Drehzahl der Antriebs- und Bremstrommel über eine einstellbare Eingriffswirkung von Antriebs- und Bremsriemen ergibt.

Die Antriebs- und Bremseinrichtung kann ferner eine betätigbare und auf den Antriebsriemen wirkende Stellvorrichtung umfassen. Über die Stellvorrichtung kann eine Riemenspannung für den Antriebsriemen bereitgestellt werden, so dass der Antriebsriemen variabel in unterschiedliche Spannungszustände spannbar ist. Über den Spannungszustand des Antriebsriemens kann ein auf die Antriebs- und Bremstrommel wirkendes Antriebsmoment variabel eingeleitet werden.

Des Weiteren kann die Antriebs- und Bremseinrichtung eine betätigbare und auf den Bremsriemen wirkende Spannvorrichtung umfassen. Über die Spannvorrichtung kann eine Riemenspannung für den Bremsriemen bereitgestellt werden, so dass der Bremsriemen variabel in unterschiedliche Spannungszustände spannbar ist. Über den Spannungszustand des Bremsriemens kann ein auf die Antriebs- und Bremstrommel wirkendes Bremsmoment variabel eingeleitet werden.

Die auf den Antriebsriemen wirkende Stellvorrichtung und die auf den Bremsriemen wirkende Spannvorrichtung stehen vorzugsweise miteinander in Verbindung, wobei durch Betätigen der auf den Antriebsriemen wirkenden Stellvorrichtung die auf den Bremsriemen wirkende Spannvorrichtung betätigbar ist. Die Verbindung der Stellvorrichtung und Spannvorrichtung kann durch mechanische, hydraulische oder auch elektrische Stellmittel erfolgen, die in mechanischer Verbindung miteinander stehen. Es ist auch denkbar eine nicht-mechanische Verbindung zwischen der Stellvorrichtung und der Spannvorrichtung über elektronische Mittel herzustellen, so dass beispielsweise beide Vorrichtungen über jeweils voneinander mechanisch getrennte, jedoch elektronisch ansteuerbare Stellmittel betätigbar sind. Im Sinne einer Verbindung stehen die Stellvorrichtung und die Spannvorrichtung dann durch eine elektronische Steuerung miteinander in Verbindung, so dass die Spannvorrichtung in Abhängigkeit von der Stellvorrichtung elektronisch angesteuert würde.

Der Antriebsriemen kann eingangsseitig mit einer Riemenantriebsrolle in Eingriff stehen, wobei letztere mit Antriebsmitteln verbunden ist. Als Antriebsmittel können angetriebene Bauteile, insbesondere direkt oder indirekt angetriebene Presswalzen der Rundballenpresse dienen, derart, dass beispielsweise die Riemenantriebsrolle drehfest mit einer der Presswalzen verbunden ist. Denkbar ist es hier auch einen separaten Antrieb, also einen von den Presswalzen getrennten Antrieb für die Riemenantriebsrolle zu wählen, beispielsweise einen Elektromotor, der in Abhängigkeit verschiedener Betriebsphasen einer Rundballenpresse, insbesondere in einer Umwicklungsmaterialeinführungsphase, einer Umwicklungsmaterialwickelphase und/oder einer Umwicklungsmaterialtrennphase, ansteuerbar ist.

Die oben genannte Stellvorrichtung für den Antriebsriemen ist vorzugsweise über einen Aktuator in Abhängigkeit von verschiedenen Betriebsphasen für eine Rundballenpresse ansteuerbar, wobei die Betriebsphasen wenigstens eine Umwicklungsmaterialeinführungsphase, eine Umwicklungsmaterialwickelphase und eine Umwicklungsmaterialtrennungsphase umfassen. Der Aktuator kann in Form eines elektronisch oder mechanisch ansteuerbaren Hydraulikzylinders oder Elektromotors ausgebildet sein. Ferner kann auch die auf den Bremsriemen wirkende Spannvorrichtung in einen aktivierten oder deaktivierten Betriebszustand gebracht werden, beispielsweise durch eine Hebelspannvorrichtung mittels Spannhebel, durch die der Bremsriemen aus einem Betriebszustand in einen Außerbetriebszustand gebracht wird, wobei der Bremsriemen im Betriebszustand enger um die Antriebs- und Bremstrommel gespannt ist als im Außerbetriebszustand, bzw. der Bremsriemen im Außerbetriebszustand von der Antriebs- und Bremstrommel gelöst wird.

Die vorangehend beschriebene Ballenwickeleinrichtung findet ihren Einsatz vorzugsweise in Rundballenpressen für landwirtschaftliches Erntegut.

Eine Rundballenpresse mit oben genannter Ballenwickeleinrichtung wird vorzugsweise nach einem Verfahren betrieben, welches vorsieht, dass in einer Umwicklungsmaterialeinführungsphase, in der das Umwicklungsmaterial der Ballenpresskammer einer Rundballenpresse zugeführt wird, die Antriebs- und Bremseinrichtung mit einem ersten Bremsmoment seitens des Bremsriemens betrieben wird, in einer Umwicklungsmaterialwickelphase, in der das Umwicklungsmaterial in der Ballenpresskammer um den Ballen gewickelt wird, mit einem zweiten Bremsmoment seitens des Bremsriemens betrieben wird und in einer Umwicklungsmaterialtrennphase, in der das um den Rundballen gewickelte Umwicklungsmaterial durch eine Schneideinrichtung von der Umwicklungsmaterialrolle getrennt wird, mit einem dritten Bremsmoment seitens des Bremsriemens betrieben wird. Andererseits wird die Antriebs- und Bremseinrichtung seitens des Antriebsriemens mit einem ersten Antriebsmoment in der Umwicklungsmaterialeinführphase, mit einem zweiten Antriebsmoment in der Umwicklungsmaterialwickelphase und mit einem dritten Antriebsmoment in der Umwicklungsmaterialtrennphase betrieben. Die Ballenwickeleinrichtung wird demnach entsprechend der genannten verschiedenen Betriebsphasen in verschiedenen Betriebsstellungen mit unterschiedlichen auf die Antriebs- und Bremstrommel wirkenden Antriebs- bzw. Bremsmomenten betrieben. Daraus ergeben sich unterschiedliche Antriebsmomente bzw. Bremsmomente bzw. Drehzahlen bzw. Drehgeschwindigkeiten für eine mit der Antriebsrolle in Eingriff stehende Umwicklungsmaterialrolle, wodurch unterschiedliche Umwicklungsmaterialspannungszustände beim Abrollen des Umwicklungsmaterials von der Umwicklungsmaterialrolle in den unterschiedlichen Betriebsphasen der Ballenpresse erzielbar sind. Der Umwicklungsmaterialspannungszustand ergibt sich dabei aus dem Maß der Bremsung der Umwicklungsmaterialrolle durch die Antriebsrolle gegenüber der Abrollgeschwindigkeit des Umwicklungsmaterials von der Umwicklungsmaterialrolle, die durch die Rotation des Ballens beim Mitführen des Umwicklungsmaterials durch den Ballen entsteht.

Hierbei kann vorgesehen sein, dass das erste Bremsmoment geringer als das zweite Bremsmoment und/oder das erste Bremsmoment geringer als das dritte Bremsmoment und/oder dass das dritte Bremsmoment ungleich dem zweiten Bremsmoment ist. Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer Rundballenpresse mit einer Ballenwickeleinrichtung,
- Fig. 2: eine vergrößerte schematische Seitenansicht der Ballenwickeleinrichtung aus Figur 1 in einer Betriebsstellung für eine Umwicklungsmaterialeinführungsphase,
- Fig. 3: eine vergrößerte schematische Seitenansicht der Ballenwickeleinrichtung aus Figur 1 in einer Betriebsstellung für eine Umwicklungsmaterialwickelphase,
- Fig. 4: eine vergrößerte schematische Seitenansicht der Ballenwickeleinrichtung aus Figur 1 in einer Betriebsstellung für eine Umwicklungsmaterialtrennphase,
- Fig. 5: eine weitere vergrößerte schematische Seitenansicht der Ballenwickeleinrichtung aus Figur 1 mit einer Spannhebeleinrichtung für einen Bremsriemen in einem gespannten Betriebszustand und
- Fig. 6: eine weitere vergrößerte schematische Seitenansicht der Ballenwickeleinrichtung aus Figur 1 mit der Spannhebeleinrichutng für den Bremsriemen in einem deaktivierten Betriebszustand.

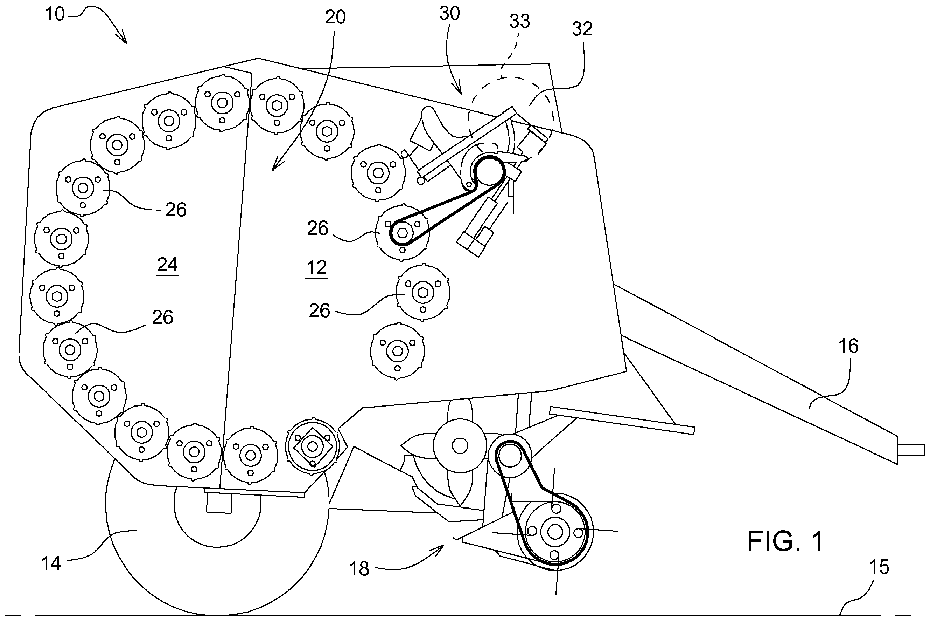

Eine in der Figur 1 schematisch dargestellte Rundballenpresse 10 umfasst einen ersten Gehäuseteil 12, der sich mittels Rädern 14 auf einem Boden 15 abstützt und mittels einer Deichsel 16 an ein nicht gezeigtes Zugfahrzeug, z. B. einen Ackerschlepper, anschließbar ist.

An einer in Vorwärtsfahrtrichtung vorderen unteren Seite des ersten Gehäuseteils 12 befindet sich in bekannter Weise eine Aufnahme- und Fördereinrichtung 18 für Erntegut, wobei der erste Gehäuseteil 12 einen vorderen Teil eines Ballenpressraums 20 umgibt. An dem rückwärtigen oberen Eckbereich des ersten Gehäuseteils 12 befindet sich ein Lager (nicht gezeigt) für ein schwenkbares zweites Gehäuseteil 24, das einen hinteren Teil des Ballenpressraums 20 umgibt. Das zweite Gehäuseteil 24 gibt im geöffneten Zustand (nicht gezeigt) einen Auslass (nicht gezeigt) frei, durch welchen ein von der Rundballenpresse 10 gepresster Ballen (nicht gezeigt) abgesetzt bzw. entladen oder ausgeworfen werden kann. Das schwenkbare zweite Gehäuseteil 24 kann mittels Stellmotoren (nicht gezeigt) betätigt werden (geöffnet und geschlossen werden) und stellt somit eine Auslassklappe für einen im Ballenpressraum 20 gepressten Ballen dar.

Die Rundballenpresse 10, mit größenunveränderlichem Ballenpressraum 20 ausgebildet, enthält eine Vielzahl zueinander parallel verlaufender Presselemente zum Pressen von Erntegut in Form von Presswalzen 26 (exemplarisch wurden hier nur einige wenige Presswalzen 26 mit dem Bezugszeichen "26" versehen), deren Rotationsachsen bei geschlossenem zweiten Gehäuseteil 24 auf einem Kreisbogen gelegen sind, und von denen wenigstens einige angetrieben sind. Alternativ kann die Rundballenpresse 10 auch in bekannter Weise als solche mit einem größenveränderlichen Ballenpressraum 20 bzw. als Rundballenpresse 10 mit variablem Ballenpressraum 20 ausgebildet werden, wobei die Presselemente dann, ebenfalls in bekannter Weise, als Riemen, Gurte oder Kettenanordnungen (nicht gezeigt) ausgebildet sein können.

Ferner umfasst die Rundballenpresse 10 eine Ballenwickeleinrichtung 30, die mit einer Umwicklungsmaterialrolle 32 bestückt ist. Als Umwicklungsmaterial 33 kann Netz, Folie oder auch Garn eingesetzt werden. Die Ballenwickeleinrichtung 30 umfasst ferner eine Zuführeinrichtung (nicht gezeigt) für das Umwicklungsmaterial, mittels welcher das Umwicklungsmaterial 33 von der Umwicklungsmaterialrolle 32 in den Ballenpressraum 20 geführt wird.

Nachdem der eigentliche Pressvorgang, also die Erntegutaufnahme und Bildung eines Rundballens durch die Presswalzen 26, abgeschlossen ist, wird die Ballenwickeleinrichtung 30 aktiviert, und ein sich dem Pressvorgang anschließender Umwicklungsvorgang eingeleitet.

Bei Einleiten eines Umwicklungsvorgangs wird in einer Umwicklungsmaterialeinführungsphase durch eine mechanisch ausgelöste Zuführbewegung Umwicklungsmaterial in Richtung der Presskammer 20 geführt, so dass ein freies Umwicklungsmaterialende mit dem sich in der Presskammer 20 rotierenden Rundballen in Berührung kommen kann und das Umwicklungsmaterial 33 mitgerissen und aufgenommen wird. Durch Rotation des Rundballens wird das Umwicklungsmaterial 33 in einer Umwicklungsmaterialwickelphase in einer oder mehreren Lagen um den Umfang des Rundballens gewickelt. Der Umwicklungsvorgang wird mit einer Umwicklungsmaterialtrennphase, in der das um den Rundballen gewickelte Umwicklungsmaterial 33 von der Umwicklungsmaterialrolle 32 durch eine Schneideinrichtung 40 getrennt wird, abgeschlossen.

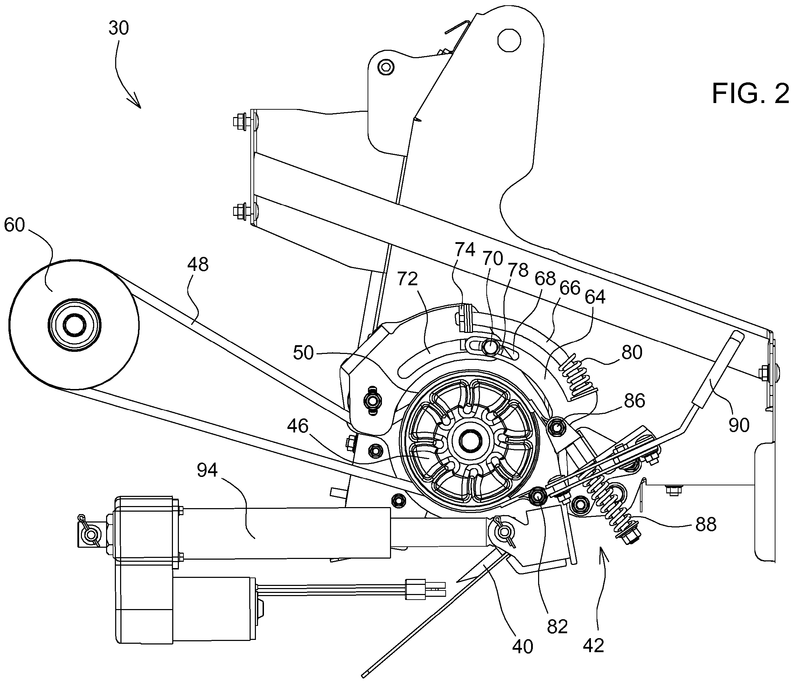

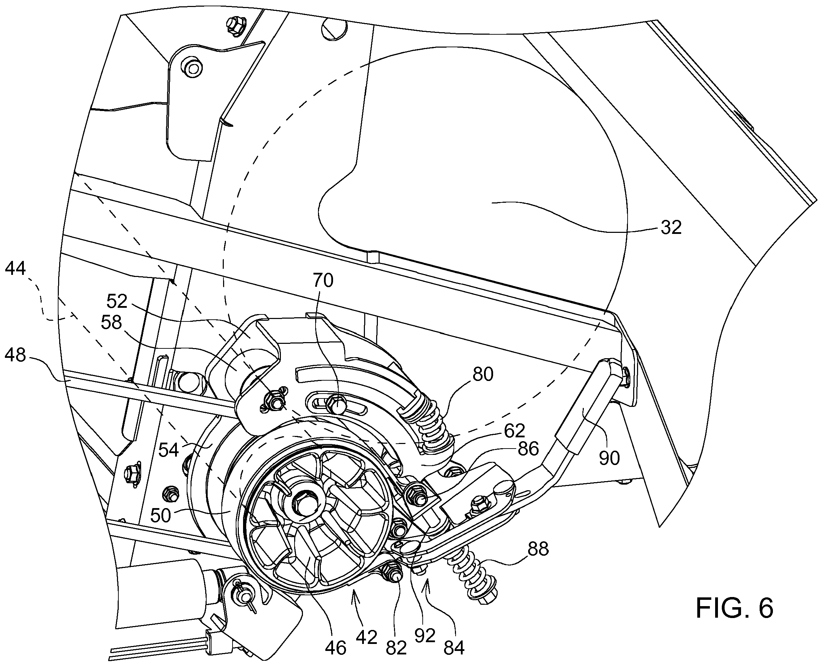

Wie zudem in den Figuren 2 bis 6 im Detail dargestellt ist, umfasst die Ballenwickeleinrichtung 30 eine Antriebs- und Bremseinrichtung 42, die mit einer Antriebsrolle 44 verbunden ist. Die Antriebsrolle 44 ist mit der Umwicklungsmaterialrolle 32 in Eingriff, bzw. steht mit dieser in einem Reibschluss, wie schematisch durch gestrichelte Linien in Figur 6 abgebildet ist.

Die Antriebs- und Bremseinrichtung 42 umfasst ferner eine kombinierte Antriebs- und Bremstrommel 46, die sowohl mit einem variabel spannbaren Antriebsriemen 48 als auch mit einem variabel spannbaren Bremsriemen 50 in Verbindung steht. Die Antriebs- und Bremstrommel 46 ist drehfest mit der Antriebsrolle 44 verbunden und steht ferner mit dem Antriebsriemen 48 und mit dem Bremsriemen 50 in Verbindung.

Die Antriebs- und Bremseinrichtung 42 umfasst eine betätigbare bzw. in Umfangsrichtung der Antriebs- und Bremstrommel 46 verstellbare, auf den Antriebsriemen 48 wirkende Stellvorrichtung 52, die einen scheibenförmigen Stellkörper 54 und einen Führungsteil 56 umfasst. Der Führungsteil 56 erstreckt sich von dem Stellkörper 54 radial beabstandet zur Antriebs- und Bremstrommel 46 und umschließt diese teilweise in Umfangsrichtung, wobei am Führungsteil 56 eine Spannrolle 58 gelagert ist, die mit dem Antriebsriemen 48 zusammenwirkt.

Der Antriebsriemen 48 ist an einer Seite um eine Riemenantriebsrolle 60 gelegt, die mit einem Antriebselement drehfest in Verbindung steht. Als Antriebselement dient hier eine der Presswalzen 26, die von dem Ballen während des Ballenbildungsprozesses in Rotation versetzt wird. An der der einen Seite gegenüber liegenden Seite des Antriebsriemens 48 ist dieser um die Antriebs- und Bremstrommel 46 gelegt. Mittels der Spannrolle 58 kann der Antriebsriemen in unterschiedliche Spannungszustände gebracht werden, wobei in Abhängigkeit von der Position des Stellkörpers 54 in Umfangsrichtung der Antriebs- und Bremstrommel 46 die Spannrolle 58 unterschiedlich stark auf den Antriebsriemen gedrückt wird, wie insbesondere in den Figuren 2 bis 4 dargestellt ist. In Abhängigkeit davon werden durch den sich ändernden Reibschluss zwischen Riemenantriebsrolle 60 und Antriebsriemen 48 bzw. zwischen Antriebs- und Bremstrommel 46 und Antriebsriemen 48 unterschiedliche Antriebsmomente von der Riemenantriebsrolle 60 auf die Antriebs- und Bremstrommel 46 übertragen.

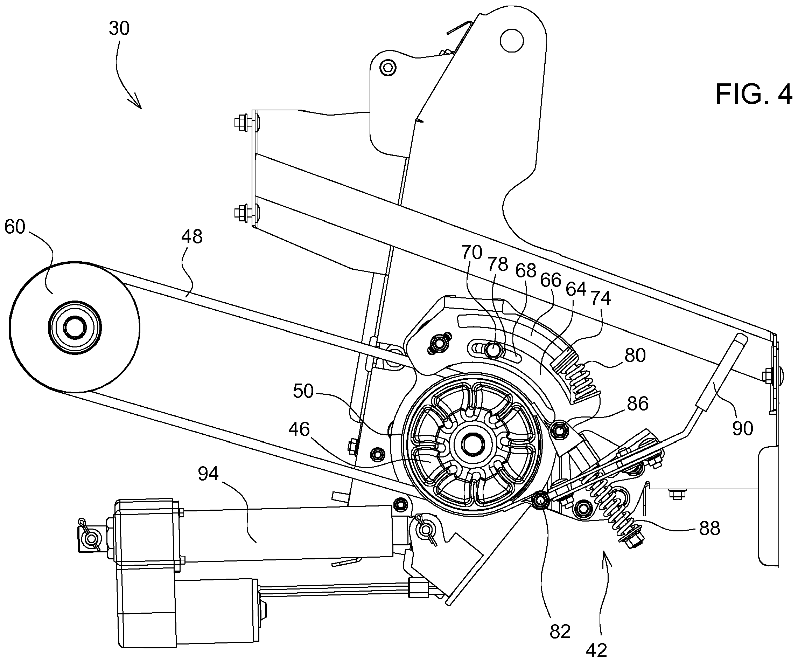

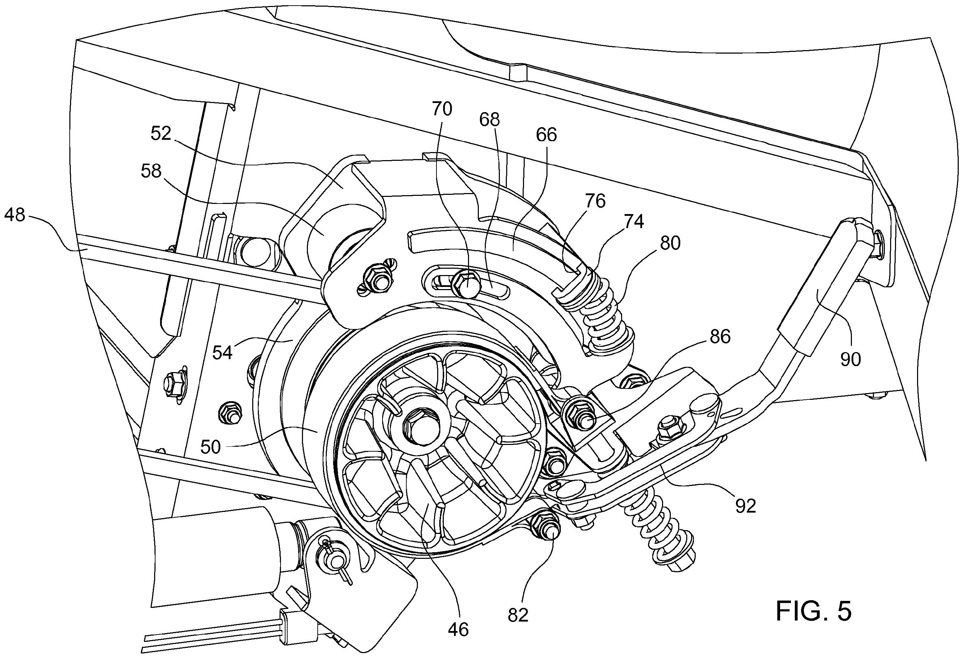

Die Ballenwickeleinrichtung 30 umfasst ferner eine betätigbare und auf den Bremsriemen 50 wirkende Spannvorrichtung 62, die sich ebenfalls in Umfangsrichtung der Antriebs- und Bremstrommel 46 verstellbar erstreckt und diese teilweise in Umfangsrichtung umschließt. Die Spannvorrichtung 62 ist mit dem Stellkörper 54 verbunden, so dass die Spannvorrichtung 62 durch Verstellen des Stellkörpers 54 ebenfalls verstellbar ist. Ferner wird die Spannvorrichtung 62 am Stellkörper geführt, wobei der Stellkörper 54 gegenüber der Spannvorrichtung 62 in Umfangsrichtung verstellbar ist. Dazu weist die Spannvorrichtung 62 einen ersten bogenförmigen Führungsarm 64 und einen zweiten bogenförmigen Führungsarm 66 auf. Beide Führungsarme 64, 66 verlaufen in Umfangsrichtung der Antriebs- und Bremstrommel 46 parallel zueinander. Der erste Führungsarm 64 ist mit einer bogenförmigen Nut 68 versehen, in der eine Stellmutter 70 verstellbar fixiert ist. Die Stellmutter 68 wird ferner in einer ebenfalls bogenförmigen Stellnut 72 verschiebbar geführt, wobei die Stellnut 72 im Stellkörper 54 ausgebildet ist und parallel zu der Nut 68 des ersten Führungsarms 64 der Spannvorrichtung 62 verläuft, wie in den Figuren 2 bis 6 abgebildet ist. Der zweite Führungsarm 66 steht mit einer sich vom Stellkörper 54 erstreckenden Lasche 74 in Eingriff, wobei die Lasche 74 eine Öffnung 76 aufweist, durch die der Führungsarm 66 geführt wird (siehe Figur 5). Die Stellschraube 70 stellt einen Anschlag dar, der an einem Ende 78 der Stellnut 72 zur Anlage kommt, wenn der Stellkörper 54 gegenüber der Spannvorrichtung 62 in Umfangsrichtung entgegen dem Uhrzeigersinn in eine erste Extremstellung gemäß Figur 2 verstellt wird. Die Lasche 74 stellt einen Anschlag dar, der auf einer auf dem Führungsarm 66 angeordneten Spiralfeder 80 zur Anlage kommt, wenn der Stellkörper 54 gegenüber der Spannvorrichtung 62 in Umfangsrichtung im Uhrzeigersinn in eine zweite Extremstellung gemäß Figur 4 oder 5 (siehe Figur 5) verstellt wird. Wie in den Figuren 2 bis 4 deutlich wird, ist die Spannrolle 58 in der ersten Extremstellung mit einem maximalen Maß auf den Antriebsriemen 48 eingestellt, so dass dieser in der ersten Extremstellung des Stellkörpers 54 mit einer maximalen Spannung betrieben wird. In der zweiten Extremstellung des Stellkörpers 54 ist die Spannrolle 58 hingegen mit einem minimalen Maß auf den Antriebsriemen 48 eingestellt, nämlich losgelöst von diesem, so dass der Antriebsriemen 48 ohne bzw. mit einer minimalen Spannung betrieben wird.

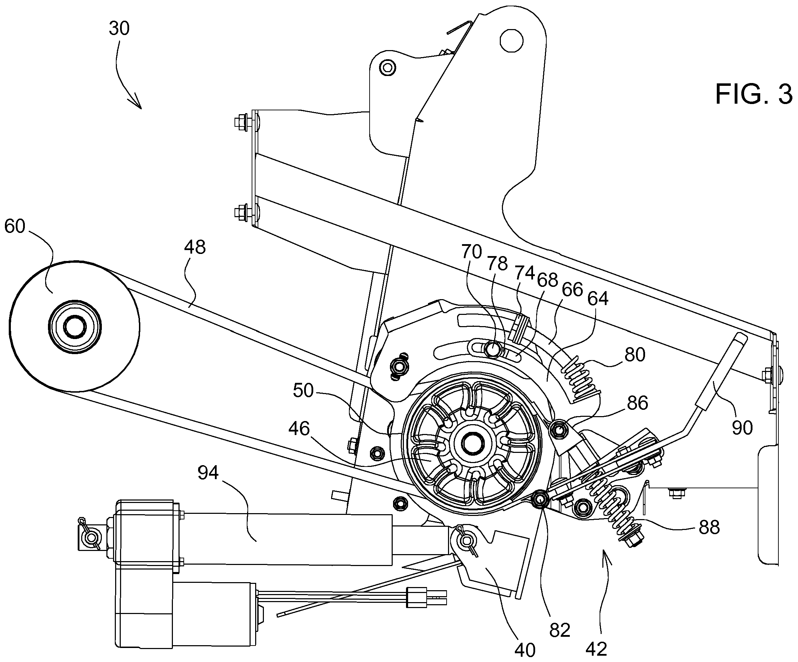

Der Bremsriemen 50 ist an einem ersten Ende 82 an einer am Rahmen der Rundballenpresse 10 fixierten Spannhebelleinrichtung 84 befestigt, um die Antriebs- und Bremstrommel 46 gelegt, und an einem zweiten Ende 86 mit der Spannvorrichtung 62 verbunden. Die Spannvorrichtung 62 ist mittels einer Spannfeder 88 gegenüber dem Rahmen der Rundballenpresse 10 vorgespannt und derart eingestellt, dass die Spannvorrichtung 62 in einer Vorspannstellung gehalten wird (gemäß Figur 3), in der die Stellschraube 70 in einem mittleren Bereich der Stellnut 72 gelegen ist und der Bremsriemen 50 mit einer entsprechenden Grundriemenspannung um die Antriebs- und Bremstrommel 46 gespannt ist. Die Spannvorrichtung 62 wird somit durch das oben beschriebene Zusammenwirken mit dem Stellkörper 54 aus ihrer Vorspannstellung bewegt, indem entweder die Lasche 74 über die Spiralfeder 80 auf den Bremsriemen 50 wirkt und die Riemenspannung durch Bewegen der Spannvorrichtung 62 im Uhrzeigersinn erhöht wird, oder indem die Stellschraube 70 an dem Ende 78 der Stellnut 72 zur Anlage kommt und die Riemenspannung durch Bewegen der Spannvorrichtung 62 entgegen dem Uhrzeigersinn reduziert wird.

Wie insbesondere in den Figuren 5 und 6 abgebildet ist, umfasst die Spannhebeleinrichtung 84 einen durch Hand betätigbaren Spannhebel 90, der mit einem Hebelgestänge 92 zusammenwirkt, über welches der Bremsriemen 50 von der Antriebs- und Bremstrommel 46 gelöst werden kann (Figur 6), indem das erste Ende 82 des Bremsriemens 50 entsprechend verlagert wird. Die Spannhebeleinrichtung 84 wird beispielsweise benötigt, um bei einem Wechsel der Umwicklungsmaterialrolle 32 die Antriebsrolle 44 in einen Leerlauf zu bringen. Dazu wird die Spannhebeleinrichtung 84 aus einer Spannstellung gemäß den Figuren 2 bis 5 durch manuelles Betätigen des Spannhebels 90 in eine gelöste Stellung gebracht und die Grundriemenspannung am Bremsriemen 50 aufgehoben (siehe Figur 6).

Ferner ist zwischen den mit der Riemenantriebsrolle 60 verbundenen Antriebsmitteln und der Riemenantriebsrolle 60 eine Freilaufeinrichtung (nicht gezeigt) vorgesehen, damit gewährleistet wird, dass Antriebsmittel und Antriebsrolle 44 unterschiedliche Drehzahlen einnehmen können. Dies wird beispielsweise dann eintreten, wenn der Rundballen in der Umwicklungsmaterialwickelphase das Antriebselement, insbesondere eine der Presswalzen 26, mit einer ersten Drehzahl antreibt und gleichzeitig das Umwicklungsmaterial mitreißt, so dass die Umwicklungsmaterialrolle 32 eine relativ hohe Abrolldrehzahl aufnimmt. Die mit der Umwicklungsmaterialrolle 32 in Eingriff stehende Antriebsrolle 44 nimmt aufgrund ihres geringeren Durchmessers eine noch höhere Drehzahl auf, die wiederum höher ausfallen kann, als die Drehzahl der Antriebsmittel bzw. als die der betreffenden Presswalze 26. Durch den Freilauf wird quasi gewährleistet, dass die Riemenantriebsrolle 60 in diesem Zustand betrieben werden und in Antriebsdrehrichtung den Antriebsmitteln vorauseilen kann, beziehungsweise eine höhere Drehzahl aufweisen kann, und nur in der entgegengesetzten Richtung drehfest mit der Presswalze 26 verbunden ist.

Die Stellvorrichtung 52 ist ferner über einen Aktuator 94 in Abhängigkeit von Betriebsphasen der Rundballenpresse 10 ansteuerbar, wobei die Betriebsphasen wenigstens eine Umwicklungsmaterialeinführungsphase, eine Umwicklungsmaterialwickelphase und eine Umwicklungsmaterialtrennungsphase umfassen. Der Aktuator 94 ist mit einer elektrischen Steuereinheit (nicht gezeigt) verbunden, die mittels geeigneter Sensoren Steuersignale entsprechend der sich einstellenden Betriebsphasen generiert und den Aktuator 94 in Abhängigkeit dieser Steuersignale zum Verstellen der Stellvorrichtung 52 ansteuert.

Das Verfahren zum Betreiben der Rundballenpresse 10 sieht vor, dass in einer Umwicklungsmaterialeinführungsphase, in der das Umwicklungsmaterial 33 der Ballenpresskammer 20 zugeführt wird, die Antriebs- und Bremseinrichtung 42 mit einem ersten Bremsmoment seitens des Bremsriemens 50 betrieben wird, in einer Umwicklungsmaterialwickelphase, in der das Umwicklungsmaterial 33 in der Ballenpresskammer 20 um den Ballen gewickelt wird, mit einem zweiten Bremsmoment seitens des Bremsriemens 50 betrieben wird und in einer Umwicklungsmaterialtrennphase, in der das um den Rundballen gewickelte Umwicklungsmaterial 33 durch die Schneideinrichtung 40 von der Umwicklungsmaterialrolle 32 getrennt wird, mit einem dritten Bremsmoment seitens des Bremsriemens 50 betrieben wird.

Es ist ferner vorgesehen, dass das erste Bremsmoment geringer als das zweite und/oder das dritte Bremsmoment ist, wobei das dritte Bremsmoment auch ungleich dem zweiten Bremsmoment sein kann. Durch die oben ausgeführte Anordnung einer Ballenwickeleinrichtung wird gewährleistet, dass das Umwicklungsmaterial 33 in der Umwicklungsmaterialeinführungsphase spannungsarm bzw. spannungsfrei in den Pressraum 20 eingeführt werden kann. Ferner kann das Umwicklungsmaterial 33 in der Umwicklungsmaterialwickelphase unter einer gewissen, höheren Grundspannung stehen und in der Umwicklungsmaterialtrennphase die Spannung am Umwicklungsmaterial 33 nochmals erhöht oder gegebenenfalls auch reduziert werden.

## Patentansprüche

1. Ballenwickeleinrichtung (30) für eine Rundballenpresse (10), mit einer mit einer Umwicklungsmaterialrolle (32) in Eingriff bringbaren Antriebsrolle (44) und einer mit der Antriebsrolle (44) verbundenen Antriebs- und Bremseinrichtung (42), wobei die Antriebs- und Bremseinrichtung (42) sowohl mit einem variabel spannbaren Antriebsriemen (48) als auch mit einem variabel spannbaren Bremsriemen (50) in Verbindung steht und wobei der Antriebsriemen (48) mit einer Riemenantriebsrolle (60) in Eingriff steht, welche mit Antriebsmitteln verbindbar ist, **dadurch gekennzeichnet, dass** eine Freilaufeinrichtung vorgesehen ist, derart, dass die Riemenantriebsrolle (60) Antriebsmitteln für die Riemenantriebsrolle (60) in Antriebsdrehrichtung vorauseilen kann.

2. Ballenwickeleinrichtung (30) nach Anspruch 1, **dadurch gekennzeichnet, dass** die Antriebs- und Bremseinrichtung (42) eine kombinierte Antriebs- und Bremstrommel (46) umfasst, wobei die kombinierte Antriebs- und Bremstrommel (46) drehfest mit der Antriebsrolle (44) verbunden ist, sowie mit dem Antriebsriemen (48) und mit dem Bremsriemen (50) in Verbindung steht.

3. Ballenwickeleinrichtung (30) nach Anspruch 1 oder 2, **dadurch gekennzeichnet, dass** die Antriebs- und Bremseinrichtung (42) eine betätigbare und auf den Antriebsriemen (48) wirkende Stellvorrichtung (52) umfasst.

4. Ballenwickeleinrichtung (30) nach einem der Ansprüche 1 bis 3, **dadurch gekennzeichnet, dass** die Antriebs- und Bremseinrichtung (42) eine betätigbare und auf den Bremsriemen (50) wirkende Spannvorrichtung (62) umfasst.

5. Ballenwickeleinrichtung (30) nach Anspruch 4, **dadurch gekennzeichnet, dass** die auf den Antriebsriemen (48) wirkende Stellvorrichtung (52) und die auf den Bremsriemen (50) wirkende Spannvorrichtung (62) miteinander in Verbindung stehen und durch Betätigen der auf den Antriebsriemen (48) wirkenden Stellvorrichtung (52) die auf den Bremsriemen (50) wirkende Spannvorrichtung (62) betätigbar ist.

6. Ballenwickeleinrichtung (30) nach einem der Ansprüche 3 bis 5, **dadurch gekennzeichnet, dass** die Stellvorrichtung (52) über einen Aktuator (94) in Abhängigkeit von Betriebsphasen einer Rundballenpresse (10) ansteuerbar ist, wobei die Betriebsphasen wenigstens eine Umwicklungsmaterialeinführungsphase, eine Umwicklungsmaterialwickelphase und eine Umwicklungsmaterialtrennungsphase umfassen.

7. Rundballenpresse (10) mit einer Ballenwickeleinrichtung (30) nach einem der Ansprüche 1 bis 6.

8. Verfahren zum Betreiben einer Rundballenpresse (10) mit einer Ballenwickeleinrichtung (30) nach einem der Ansprüche 1 bis 7, **dadurch gekennzeichnet, dass** in einer Umwicklungsmaterialeinführungsphase, in der das Umwicklungsmaterial (33) der Ballenpresskammer (20) einer Rundballenpresse (30) zugeführt wird, die Antriebs- und Bremseinrichtung (42) mit einem ersten Bremsmoment seitens des Bremsriemens (50) betrieben wird, in einer Umwicklungsmaterialwickelphase, in der das Umwicklungsmaterial (33) in der Ballenpresskammer (20) um den Rundballen gewickelt wird, mit einem zweiten Bremsmoment seitens des Bremsriemens (50) betrieben wird und in einer Umwicklungsmaterialtrennphase, in der das um den Rundballen gewickelte Umwicklungsmaterial (33) durch eine Schneideinrichtung (40) von der Umwicklungsmaterialrolle (32) getrennt wird, mit einem dritten Bremsmoment seitens des Bremsriemens (50) betrieben wird.

9. Verfahren nach Anspruch 8, **dadurch gekennzeichnet, dass** das erste Bremsmoment geringer als das zweite Bremsmoment ist.

10. Verfahren nach Anspruch 8 oder 9, **dadurch gekennzeichnet, dass** das erste Bremsmoment geringer als das dritte Bremsmoment ist.

11. Verfahren nach einem der Ansprüche 8 bis 10, **dadurch gekennzeichnet, dass** das dritte Bremsmoment ungleich dem zweiten Bremsmoment ist.

## Claims

1. Bale wrapping device (30) for a round baler (10), with a drive roll (44) which can be brought into engagement with a wrapping material roll (32), and a drive and brake device (42) connected to the drive roll (44), wherein the drive and brake device (42) is in connection both with a variably tensionable drive belt (48) and with a variably tensionable brake belt (50) and wherein the drive belt (48) is in engagement with a belt drive roll (60) which is connectable to drive means, **characterized in that** a freewheeling device is provided in such a manner that the belt drive roll (60) can run ahead of drive means for the belt drive roll (60) in the drive direction of rotation.

2. Bale wrapping device (30) according to Claim 1, **characterized in that** the drive and brake device (42) comprises a combined drive and brake drum (46), wherein the combined drive and brake drum (46) is connected to the drive roll (44) for rotation therewith, and is also in connection with the drive belt (48) and with the brake belt (50).

3. Bale wrapping device (30) according to Claim 1 or 2, **characterized in that** the drive and brake device (42) comprises an actuable adjustment apparatus (52) acting on the drive belt (48).

4. Bale wrapping device (30) according to one of Claims 1 to 3, **characterized in that** the drive and brake device (42) comprises an actuable tensioning apparatus (62) acting on the brake belt (50).

5. Bale wrapping device (30) according to Claim 4, **characterized in that** the adjustment apparatus (52) acting on the drive belt (48) and the tensioning apparatus (62) acting on the brake belt (50) are in connection with each other and, by actuation of the adjustment apparatus (52) acting on the drive belt (48), the tensioning apparatus (62) acting on the brake belt (50) is actuable.

6. Bale wrapping device (30) according to one of Claims 3 to 5, **characterized in that** the adjustment apparatus (52) is activatable via an actuator (94) depending on operating phases of a round baler (10), wherein the operating phases comprise at least one wrapping material introduction phase, a wrapping material wrapping phase and a wrapping material severing phase.

7. Round baler (10) with a bale wrapping device (30) according to one of Claims 1 to 6.

8. Method for operating a round baler (10) with a bale wrapping device (30) according to one of Claims 1 to 7, **characterized in that**, in a wrapping material introduction phase in which the wrapping material (33) is supplied to the baling chamber (20) of a round baler (30), the drive and brake device (42) is operated with a first brake torque on the part of the brake belt (50), in a wrapping material wrapping phase in which the wrapping material (33) is wrapped around the round bale in the baling chamber (20), is operated with a second brake torque on the part of the brake belt (50), and, in a wrapping material severing phase in which the wrapping material (33) wrapped around the round bale is severed from the wrapping material roll (32) by a cutting device (40), is operated with a third brake torque on the part of the brake belt (50).

9. Method according to Claim 8, **characterized in that** the first brake torque is smaller than the second brake torque.

10. Method according to Claim 8 or 9, **characterized in that** the first brake torque is smaller than the third brake torque.

11. Method according to one of Claims 8 to 10, **characterized in that** the third brake torque is not equal to the second brake torque.

## Revendications

1. Dispositif d'enveloppement de balles (30) pour une presse à balles rondes (10), comprenant un rouleau d'entraînement (44) pouvant être amené en prise avec un rouleau de matériau d'enveloppement (32) et un dispositif d'entraînement et de freinage (42) relié au rouleau d'entraînement (44), le dispositif d'entraînement et de freinage (42) étant en liaison à la fois avec une courroie d'entraînement (48) pouvant être tendue de manière variable et avec une courroie de freinage (50) pouvant être tendue de manière variable, et la courroie d'entraînement (48) étant en prise avec un rouleau d'entraînement de courroie (60), lequel peut être relié à des moyens d'entraînement, **caractérisé en ce qu'**un dispositif de roue libre est prévu, de telle sorte que le rouleau d'entraînement de courroie (60) peut être en avance sur des moyens d'entraînement pour le rouleau d'entraînement de courroie (60) dans le sens de rotation d'entraînement.

2. Dispositif d'enveloppement de balles (30) selon la revendication 1, **caractérisé en ce que** le dispositif d'entraînement et de freinage (42) comporte un tambour d'entraînement et de freinage combiné (46), le tambour d'entraînement et de freinage combiné (46) étant relié de manière solidaire en rotation au rouleau d'entraînement (44), et étant en liaison avec la courroie d'entraînement (48) et avec la courroie de freinage (50).

3. Dispositif d'enveloppement de balles (30) selon la revendication 1 ou 2, **caractérisé en ce que** le dispositif d'entraînement et de freinage (42) comporte un dispositif de réglage (52) pouvant être actionné et agissant sur la courroie d'entraînement (48) .

4. Dispositif d'enveloppement de balles (30) selon l'une quelconque des revendications 1 à 3, **caractérisé en ce que** le dispositif d'entraînement et de freinage (42) comporte un dispositif tendeur (62) pouvant être actionné et agissant sur la courroie de freinage (50).

5. Dispositif d'enveloppement de balles (30) selon la revendication 4, **caractérisé en ce que** le dispositif de réglage (52) agissant sur la courroie d'entraînement (48) et le dispositif tendeur (62) agissant sur la courroie de freinage (50) sont en liaison l'un avec l'autre et le dispositif tendeur (62) agissant sur la courroie de freinage (50) pouvant être actionné par actionnement du dispositif de réglage (52) agissant sur la courroie d'entraînement (48).

6. Dispositif d'enveloppement de balles (30) selon l'une quelconque des revendications 3 à 5, **caractérisé en ce que** le dispositif de réglage (52) peut être commandé par le biais d'un actionneur (94) en fonction de phases de fonctionnement d'une presse à balles rondes (10), les phases de fonctionnement comportant au moins une phase d'introduction de matériau d'enveloppement, une phase d'enveloppement avec du matériau d'enveloppement et une phase de séparation de matériau d'enveloppement.

7. Presse à balles rondes (10) comprenant un dispositif d'enveloppement de balles (30) selon l'une quelconque des revendications 1 à 6.

8. Procédé permettant de faire fonctionner une presse à balles rondes (10) comprenant un dispositif d'enveloppement de balles (30) selon l'une quelconque des revendications 1 à 7, **caractérisé en ce que**, lors d'une phase d'introduction de matériau d'enveloppement, dans laquelle le matériau d'enveloppement (33) est acheminé jusqu'à la chambre de mise en balle (20) d'une presse à balles rondes (30), le dispositif d'entraînement et de freinage (42) fonctionne avec un premier couple de freinage sur la courroie de freinage (50), lors d'une phase d'enveloppement avec du matériau d'enveloppement, dans laquelle le matériau d'enveloppement (33) est enveloppé autour de la balle ronde dans la chambre de mise en balle (20), le dispositif d'entraînement et de freinage fonctionne avec un deuxième couple de freinage sur la courroie de freinage (50) et, lors d'une phase de séparation de matériau d'enveloppement, dans laquelle le matériau d'enveloppement (33) enveloppé autour de la balle ronde est séparé du rouleau de matériau d'enveloppement (32) au moyen d'un dispositif de coupe (40), le dispositif d'entraînement et de freinage fonctionne avec un troisième couple de freinage sur la courroie de freinage (50).

9. Procédé selon la revendication 8, **caractérisé en ce que** le premier couple de freinage est inférieur au deuxième couple de freinage.

10. Procédé selon la revendication 8 ou 9, **caractérisé en ce que** le premier couple de freinage est inférieur au troisième couple de freinage.

11. Procédé selon l'une quelconque des revendications 8 à 10, **caractérisé en ce que** le troisième couple de freinage est différent du deuxième couple de freinage.
